# EUROPEAN PATENT SPECIFICATION

(11) **EP 2 161 885 B1**
(45) Date of publication and mention of the grant of the patent: **26.02.2014**
(21) Application number: 09168431.6
(22) Date of filing: 21.08.2009
(51) Int. Cl.: H04L 12/14

(54) **Communication system**
Kommunikationssystem
Système de communication

(30) Priority: 09.09.2008 JP 2008230520
(43) Date of publication of application: 10.03.2010
(73) Proprietor: Hitachi, Ltd., Tokyo 100-8280 (JP)
(72) Inventor: Matsubara, Daisuke, Tokyo 100-8220 (JP); Takeda, Yukiko, Tokyo 100-8220 (JP)
(74) Representative: MERH-IP Matias Erny Reichl Hoffmann

(56) References cited:
- WO-A-2009/110158
- JP-A- 2004 247 916
- US-A1- 2002 052 915
- US-A1- 2005 044 188

## Description

### BACKGROUND OF THE INVENTION

### Field of the Invention

The present invention relates to a communication system and partltularly to a communication system in which plural line classifications usable between a service provider and a service platform are specified,

### Description of the Related Art

In a service platform to provide network functions to plural service providers, when a service provider issues a use request for a network function to the service platform (for example, 3rd Party Call Control (3PCC), video distribution, presence, etc.), there is a case where the service platform selects a line classification (for example, the Internet, Virtual Private Network (VPN), Next Generation Network (NGN), overlay Network (NW), etc.) fixedly set for each application.

JP-A-2-285839 (patent document 1) discloses that a control to select an optimum route from communication lines of several companies to a destination area is simplified by previously providing a priority pattern.

US 2005/0044188 A1 pertains to a service providing system allowing flexible cooperation between applications exploiting different protocols.

WO 2009/110158 A1 is prior art according to Article 54(3) EPC and relates to a service control device, service control system and method.

### SUMMARY OF THE INVENTION

When plural users share plural line classifications, there Is a case where it Is necessary for a service provider to select a line classification. Besides, when a service provider does not grasp a line classification used by a user, there is a case where a service can not be provided through an optimum line classification.

In view of the above, it is an object of the invention to provide a communication system in which one of plural network classifications or line classifications is selected for one network function and can be used.

According to the first solving means of this invention, there is provided a communication system comprising:
a line classification selection server which stores, for each of network classifications of a plurality of networks, network information including one or both of communication quality information and billing information of the network; and
a plurality of communication control servers provided for the plurality of networks, respectively, and for providing communication services to user terminals,
wherein
the line classification selection server receives, from a communication device of a service provider, a service start request including service classification information, network condition information including a communication quality condition and/or a billing condition of a network to be used, and identification information of the user terminal,
the line classification selection server refers to the network information based on the network condition information included in the service start request and selects a network classification satisfying the communication quality condition and/or the billing condition,
the line classification selection server transmits a server start request including the service classification information and the identification information of the user terminal to the communication control server of the network corresponding to the selected network classification, and
the communication control server receives the server start request, and performs communication control for providing a communication service corresponding to the service classification information to the user terminal corresponding to the identification information of the user terminal.

The communication system described above further comprises
a user information management device which stores the identification information of the communication control server from which a confirmation response is received in response to the transmitted server start request or the identification information of the communication control server from which an error response is not received correspondingly to the identification information of the user terminal included in the service start request,
wherein, when newly receiving a service start request, the line classification selection server refers to the user information management device based on the identification information of the user terminal included in the service start request, obtains the identification information of corresponding communication control server, and transmits the server start request to the communication control server.

According to the second solving means of this invention, there is provided a communication system comprising:
a line classification selection server which stores, for each of network classifications of a plurality of networks, network information including one or both of communication quality information and billing information of the network; and
a session initiation protocol server provided for each of the plurality of networks; and
a communication control server which communicates with the session initiation protocol server to provides a communication service to a user terminal,
   wherein
the line classification selection server receives, from a communication device of a service provider, a service start request including service classification information, network condition information including a communication quality condition and/or a billing condition of a network to be used, and identification information of the user terminal,
the line classification selection server refers to the network information based on the network condition information included in the service start request and selects a network classification satisfying the communication quality condition and/or the billing condition,
the line classification selection server transmits a server start request including the service classification information, the identification information of the user terminal and selected network classification to the communication control server, and
the communication control server receives the server start request, and communicates with the session initiation protocol server corresponding to the selected network classification, to perform communication control for providing the communication service corresponding to the service classification information to the user terminal corresponding to the identification information of the user terminal.

According to the third solving means of this invention, there is provided a communication system comprising:
a line classification selection server which stores, for each of network classifications of a plurality of networks, network information including one or both of communication quality information and billing information of the network; and
a video distribution server for distributing video data to user terminals,
   wherein
the line classification selection server receives, from a communication device of a service provider, a service start request including video classification information, network condition information including a communication quality condition and/or a billing condition of a network to be used, and identification information of the user terminal,
the line classification selection server refers to the network information based on the network condition information included in the service start request and selects a network classification satisfying the communication quality condition and/or the billing condition,
the line classification selection server transmits a server start request including the video classification information, the identification information of the user terminal and selected network classification to the video distribution server, and
the video distribution server receives the server start request, and distributes video data corresponding to the video classification information to the user terminal corresponding to the identification information of the user terminal through the network of the selected network classification.

According to the invention, it is possible to provide a communication system in which one of plural network classifications or line classifications is selected for one network function and can be used.

### BRIEF DESCRIPTION OF THE DRAWINGS

FIG. 1 is a structural view of a network system of a first embodiment.
FIG. 2 is a structural view of a line classification selection server 5.
FIG. 3 is a flowchart (1) of a control processing section 500.
FIG. 4 is a flowchart (2) of the control processing section 500.
FIG. 5 is an explanatory view of service provider information 210.
FIG. 6 is an explanatory view of corresponding information 220.
FIG. 7 is an explanatory view of network function information 230.
FIG. 8 is a sequence view at the time of 3PCC server start request.
FIG. 9 is a sequence view when a user terminal 7 corresponding to the network selected at the time of the 3PCC server start request does not exist.
FIG. 10 is a structural view of a network system of a second embodiment.
FIG. 11 is a flowchart (1) of a control processing section 500 of the second embodiment.
FIG. 12 is a flowchart (2) of the control processing section 500 of the second embodiment.
FIG. 13 is an explanatory view of user information 8.
FIG. 14 is a structural view of a network system of a third embodiment.
FIG. 15 is a structural view of a 3PPC server 4.
FIG. 16 is a structural view of a network system of a fourth embodiment.
FIG. 17 is a structural view of a video distribution server 9.
FIG. 18 is a sequence view at the time of video distribution.

### DETAILED DESCRIPTION OF THE INVENTION

### 1. First Embodiment

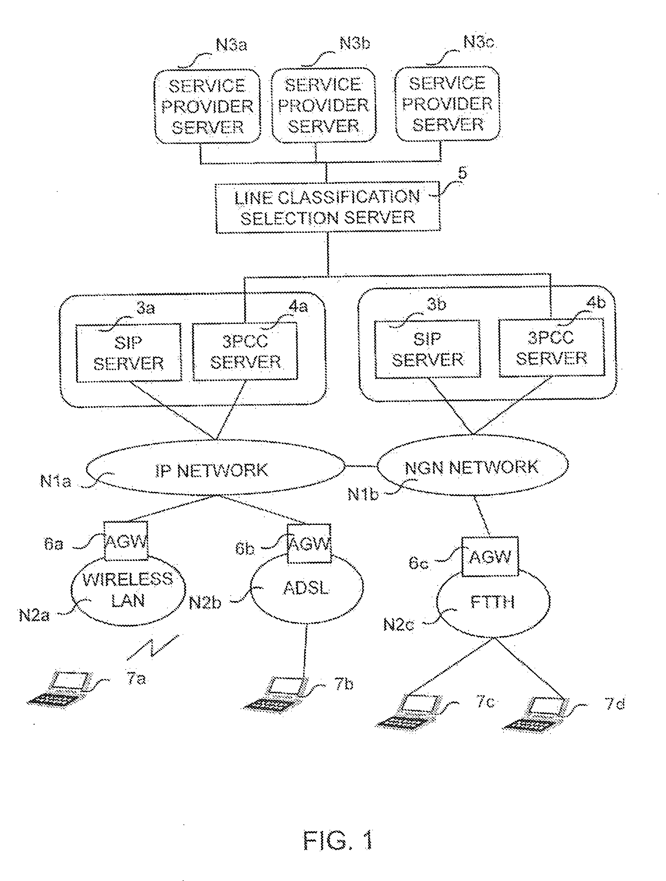

FIG. 1 is a structural view of a network system of a first embodiment.

This network system includes, for example, service provide servers (hereinafter referred to as service providers) N3a, N3b and N3c, a line classification selection server 5, Session Initiation Protocol (SIP) servers 3a and 3b, and 3PCC servers (communication control servers) 4a and 4b. The service provider N3 is connected to, for example, the 3PCC servers 4a and 4b through the line classification selection server 5. The 3PCC server 4a is connected to, for example, the SIP server 3a and access gate ways (AGWs) 6a and 6b through an IP network N1a. The 3PCC server 4b is connected to, for example, the SIP server 3b and an AGW 6c through an NGN network N1b. The AGW 6a is connected to, for example, a user terminal 7a through a wireless Local Area Network (LAN) N2a. The AGW 6b is connected to, for example, a user terminal 7b through an Asymmetric Digital Subscriber Line (ADSL) N2b. The AGW 6c is connected to, for example, user terminals 7c and 7d through a Fiber To The Home (FTTH) N2c. Incidentally, the number of the user terminals 7, and the kinds and the number of the networks may be appropriately various other than those of the illustrated example.

In the network system, plural line classifications usable between, for example, the service provider N3 and the service platform can be specified. Here, the service platform includes, for example, the line classification selection server 5 and the 3PCC servers 4a and 4b. The service provider N3 provides, for example, communication services, such as IP telephone, telephone meeting, and video distribution, to the user terminal 7 by using the 3PCC server 4 or the like. Besides, when a network function is called, the service provider N3 specifies plural candidates or conditions for line classifications to be used. The service platform (for example, the line classification selection server 5) selects an optimum line from the line classifications presently used by the user terminal 7.

The SIP servers 3a and 3b are servers in conformity with the SIP and having functions as, for example, proxy, redirect and register servers. The 3PCC servers 4a and 4b perform, for example, 3PCC control. Specifically, a call is made to the user terminals 7 according to a request from the service provider N3, and a communication session between the user terminals 7 is established. Besides, the 3PCC server 4 is provided for each of the plural networks, and realizes a communication service to the user terminal 7. The AGW 6 is a gateway between, for example, the network (for example, the wireless LAN N2a, the ADSL N2b or the FTTH N2c) to which the user terminal 7 is connected and the network (for example, the IP network N1a or the NGN network N1b) to which the SIP server 3 and the 3PCC server 4 are connected. For example, the AGW 6 mutually converts data different in protocol and enables communication. The user terminal 7 can be connected to an arbitrary network such as the IP network N1a or the NGN network N1b. The user terminal 7 can communicate with the 3PCC server 4 and the service provider N3 through the network selected by the line classification selection server 5.

The line classification selection server 5 stores network function information including one of or both of network communication quality information and billing information for each of the network classifications of the plural networks. The communication quality information includes, for example, one or more of presence or absence information about priority control indicating its existence or absence, priority control class information, and presence or absence information about a redundant line. The billing information can include, for example, presence or absence information about billing due to use of the network.

The line classification selection server 5 receives a service start request including service classification information, network condition information including a communication quality condition of a network to be used and/or a billing condition, and identification information of the user terminal 7 from the service provider N3. The line classification selection server 5 refers to the network function information based on the network condition information included in the service start request, and selects the network classification satisfying the communication quality condition and/or the billing condition. The network condition information, the communication quality condition, and the billing condition are conditions requested for the network to be used, and correspond to the foregoing network function information, the communication quality information, and the billing information. The line classification selection server 5 transmits a server start request including the service classification information and the identification information of the user terminal 7 to the 3PCC server of the network corresponding to the selected network classification. The 3PPC server 4 receives the server start request, and performs communication control for providing the communication service corresponding to the service classification information to the user terminal 7 corresponding to the identification information of the user terminal 7.

Besides, the line classification selection server 5 includes a data storage section to store service provider information in which the identification information of the service provider N3 is correlated with the usability information indicating whether or not the 3PCC service can be used, and corresponding information in which the identification information of the service provider N3 correlated with the identification information of the 3PCC server 4.

When further receiving from the service provider N3 the service start request including the identification information of the service provider N3, the line classification selection server 5 determines whether it is a first access from the service provider N3. When it is the first access from the service provider N3, the line classification selection server 5 refers to the service provider information based on the identification information of the service provider N3, and determines whether or not the 3PCC server can be used. The line classification selection server 5 correlates the identification information of the 3PCC server 4 of the network indicated by the selected network classification with the identification information of the service provider N3 in the corresponding information. When it is not the first access from the service provider N3, the line classification selection server 5 refers to the corresponding information, acquires the identification information of the 3PCC server 4 corresponding to the identification information of the service provider N3, and transmits the server start request in accordance with the identification information of the 3PCC server 4.

Besides, when plural network classifications are selected, the line classification selection server 5 transmits the server start request to the 3PCC server 4 of one network of the selected plural network classifications. When the line classification selection server 5 receives an error response transmitted when the user terminal 7 is not connected to the network of the 3PCC server 4, the line classification selection server 5 transmits the server start request to the 3PCC server 4 of another network of the selected plural network classifications.

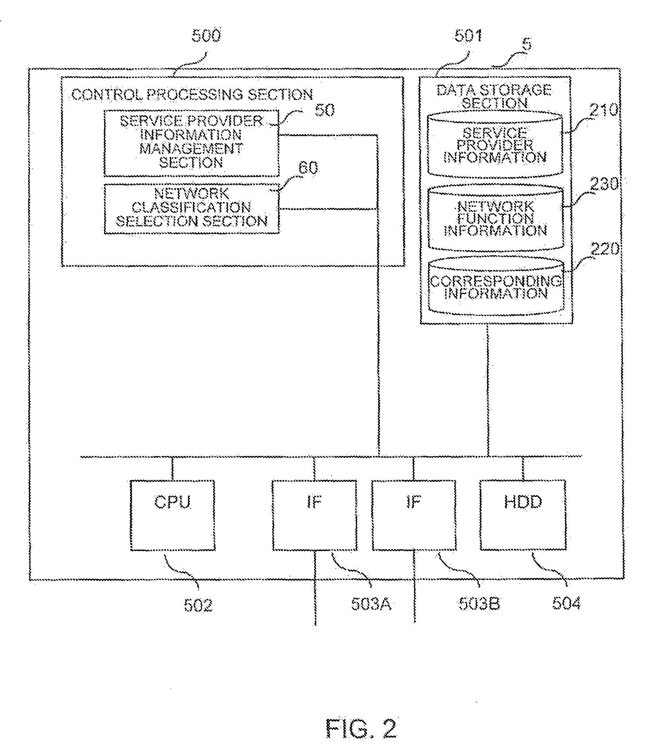

FIG. 2 is a structural view of the line classification selection server 5.

The line classification selection server 5 includes, for example, a control processing section 500, a data storage section 501, a processor (CPU) 502, interfaces (IFs) 503A and 503B, and a hard disk drive (HDD) 504. The control processing section 500 includes, for example, a service provider information management section 50, and a network classification selection section 60. The data storage section 501 stores, for example, service provider information 210, corresponding information (corresponding server information) 220, and network function information (network information) 230.

The service provider information management section 50 determines, for example, whether or not the service provider N3 can access the 3PCC server 4. The network classification selection section 60 selects, for example, a line corresponding to the request from the service provider N3. Besides, these processes may be performed by an appropriate processing section in the control processing section 500 other than the service provider information management section 50 and the network classification selection section 60.

The CPU 502 executes various processes in the line classification selection server 5. Incidentally, the processes of the service provider information management section 50 and the network classification selection section 60 may be executed by the CPU 502. The IFs 503A and 503B are interfaces for communicating with, for example, the service provider N3 and the 3PCC server 4. The HDD 504 stores various data in the line classification selection server 5. Incidentally, the data storage section 501 may exist in the HDD 504.

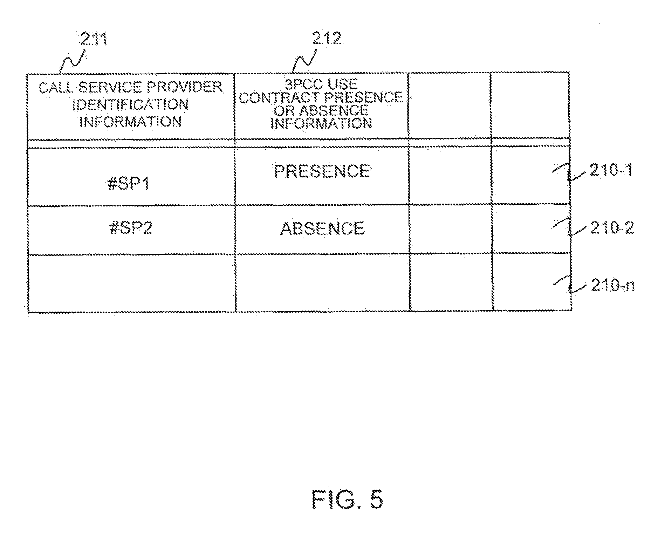

FIG. 5 is an explanatory view of the service provider information 210.

The service provider information 210 includes, for example, a 3PCC use contract presence or absence information (usability information) 212 corresponding to call service provider identification information 211. The call service provider identification information 211 is, for example, identification information to specify the service provider N3, and can be appropriate identification information such as a symbol or a character. The 3PCC use contract presence or absence information 212 indicates, for example, whether or not each of the service providers N3 can use the 3PCC server 4. The service provider information 210 is previously stored in the data storage section 501.

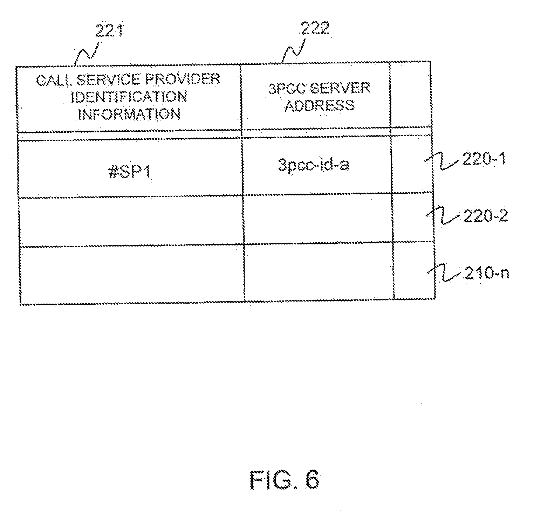

FIG. 6 is an explanatory view of the corresponding information 220.

The corresponding information 220 includes, for example, a 3PCC server address 222 corresponding to call service provider identification information 221. The call service provider identification information 221 indicates, for example, the identification information of the service provider N3 included in the service start request from the service provider N3. The 3PCC server address 222 indicates, for example, address information of the 3PCC server 4 from which a confirmation response to the transmitted server start request is received, or address information of the 3PCC server 4 from which an error response to the server start request is not received in a specified time.

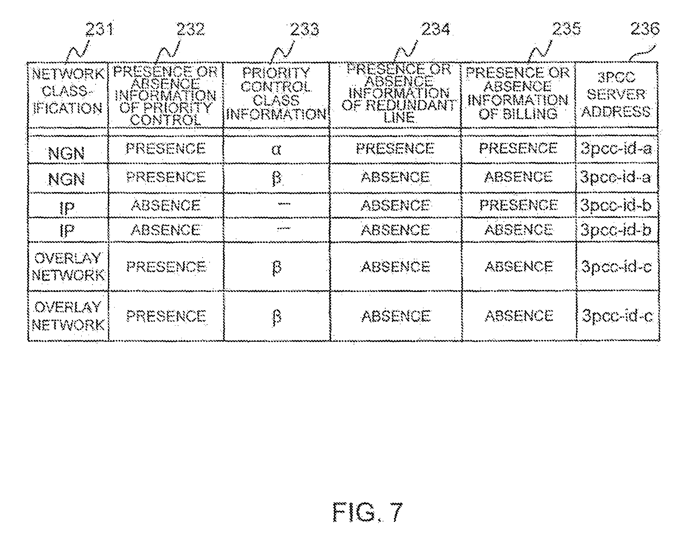

FIG. 7 is an explanatory view of the network function information 230.

The network function information 230 includes, for example, presence or absence information about priority control 232, priority control class information 233, presence or absence information about a redundant line 234, presence or absence information about billing 235, and a 3PCC server address 236 correspondingly to a network classification 231. Incidentally, the network function information 230 can include one or more of the information. The network classification 231 indicates, for example, an appropriate character or symbol expressing the classification of a network, such as IP or NGN. The presence or absence information about the priority control 232 indicates, for example, whether or not there is a priority control function such as to send a packet in descending order of priority in accordance with priority. The priority control class information 233 indicates, for example, a class of priority control. For example, the class of priority control corresponding to the number of queues, such as 2-class or 3-class, or the class of priority control corresponding to a kind of data, such as giving priority to audio data, is indicated by using appropriate identification information such as α or β. The presence or absence information about the redundant line 234 indicates, for example, whether or not the network has a redundant structure including a preliminary line. The presence or absence information about the billing 235 indicates, for example, whether or not billing occurs by use of the network.

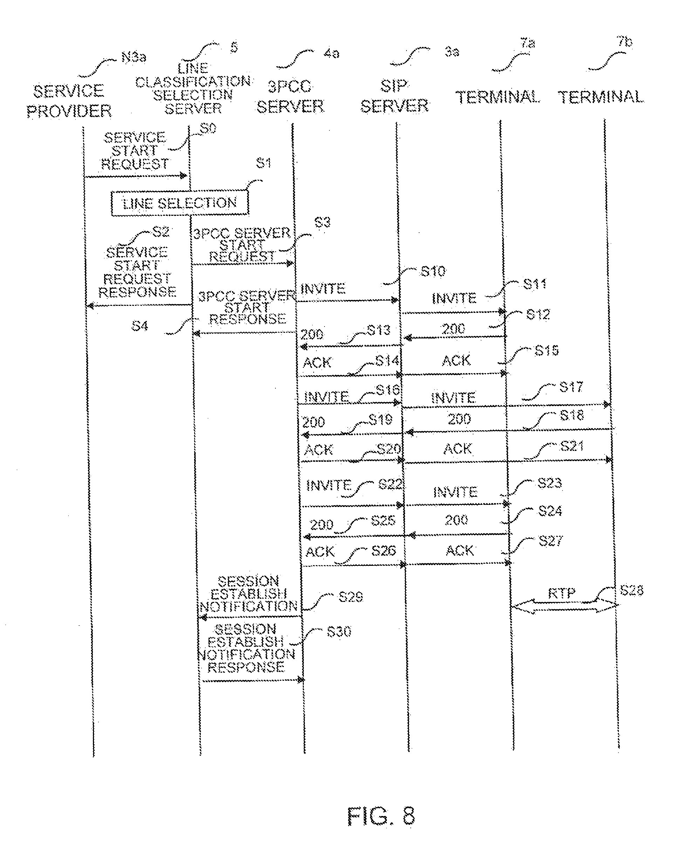

FIG. 8 is a sequence view at the time of a 3PCC server start request.

Incidentally, the detailed operations of the line classification selection server 5 will be described later.

The service provider N3a transmits a service start request to the line classification selection server 5 (S0). The service start request includes, for example, the identification information of the service provider, the service classification information, the network condition information, and the identification information of the user terminal 7. For example, such information that the user terminals 7a and 7b start a telephone meeting at a desired time (for example, 5:00 PM) can be previously set in the service provider N3a by the user terminal 7 or the like. Besides, the service provider N3a can previously set the condition of the network to be used (network condition information). For example, when it becomes the desired time, the service provider N3a transmits the service start request including the service classification indicating the telephone meeting, the set network condition information, and the identification information of the user terminals 7a and 7b to the line classification selection server 5. The network condition information can include, for example, one or more of the communication quality condition and the billing condition described above.

The line classification selection server 5 selects a line (S1). For example, the line classification selection server 5 selects the network satisfying the condition based on the network condition information, and selects a line for communicating with the selected network. The line classification selection server 5 transmits a service start request response to the service provider N3a (S2). The line classification selection server 5 transmits the 3PCC server start request to the 3PCC server 4a of the selected network (S3). For example, the 3PCC server start request includes the service classification information included in the received service start request and the identification information of the user terminal 7. The 3PCC server 4a transmits a 3PCC server start response to the line classification selection server 5 (S4). For example, the 3PCC server 4a transmits the 3PCC server start response indicating a normal response (confirmation response) to the line classification selection server 5 when the specified user terminal 7 is connected to its own network and the specified service can be provided. The 3PCC server 4a establishes, for example, a session between the user terminal 7a and the user terminal 7b in accordance with the SIP protocol through the SIP server 3a (S10 to S28). Incidentally, since a prior art method such as an Offer/Answer model with Session Description Protocol (SDP) can be used for establishing the session, an example of signals is shown in the drawing and the detailed description will be omitted. When the session is established, the 3PCC server 4a transmits a session establishment notification to the line classification selection server 5 (S29). Besides, the line classification selection server 5 transmits a session establishment notification response to the 3PCC server 4a (S30).

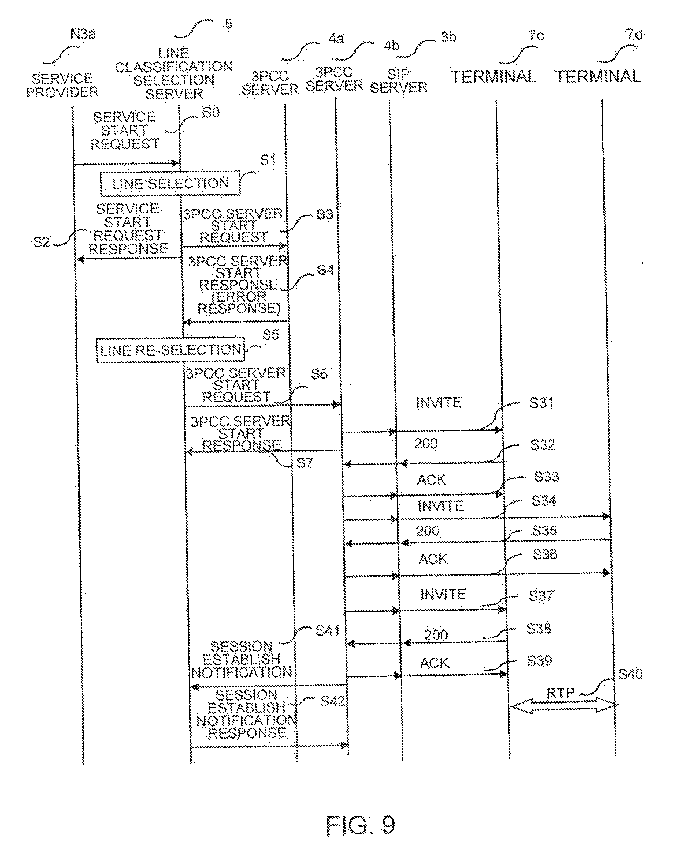

FIG. 9 is a sequence view of the case where an appropriate user terminal 7 does not exist in the network selected at the time of the 3PCC server start request.

The process from step S0 to step S3 is similar to that of FIG. 8. The 3PCC server 4a transmits a 3PCC server start response (error response) to the line classification selection server 5 (S4). For example, the 3PCC server 4a transmits the 3PCC server start response indicating an error response to the line classification selection server 5 when the user terminal 7 specified by the 3PCC server start request is not connected to its own network. The line classification selection server 5 again selects a line (S5). For example, the line classification selection server 5 selects one of the networks satisfying the network condition information received from the service provider N3, other than the network from which the error response is received. The line classification selection server 5 transmits a 3PCC server start request to the 3PCC server 4b of the network selected at step S5 (S6). For example, the line classification selection server 5 transmits the 3PCC server start request including the received service classification information and the identification information of the user terminal 7 to the 3PCC server 4b. The 3PCC server 4b transmits a 3PCC server start response to the line classification selection server 5 (S7). For example, the 3PCC server 4b transmits the 3PCC server start response indicating a normal response to the line classification selection server 5 when the specified user terminal 7 is connected to its own network, and the specified service can be provided. Incidentally, when the specified user terminal 7 is not connected to its own network, steps S4 to S6 are repeated.

The 3PCC server 4b establishes a session between the user terminal 7c and the user terminal 7d in accordance with the SIP protocol through the SIP server 3b (S31 to S40). For example, similarly to the foregoing 3PCC server 4a, an appropriate method such as the Offer/Answer model with the SDP can be used. When the session is established, the 3PCC server 4b transmits a session establishment notification to the line classification selection server 5 (S41). Besides, the line classification selection server 5 transmits a session establishment notification response to the 3PCC server 4b (S42).

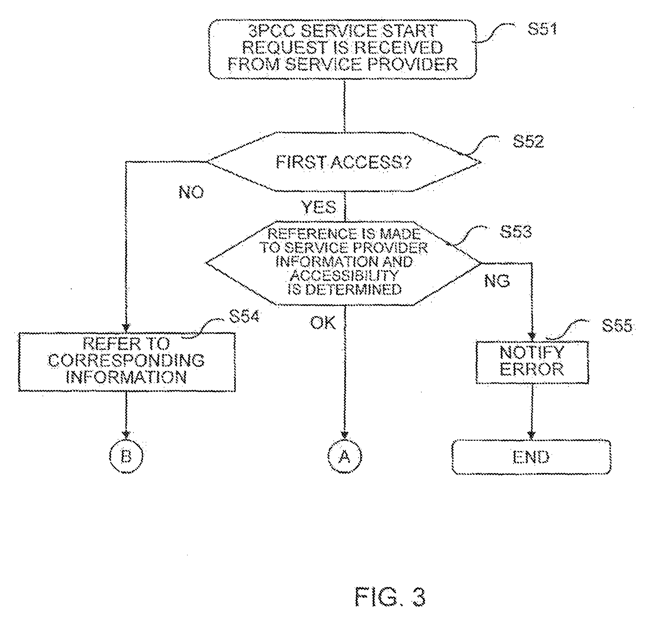

FIG. 3 is a flowchart (1) of the control processing section 500.

The process of FIG. 3 corresponds to, for example, step S0 of FIG. 8 and FIG. 9.

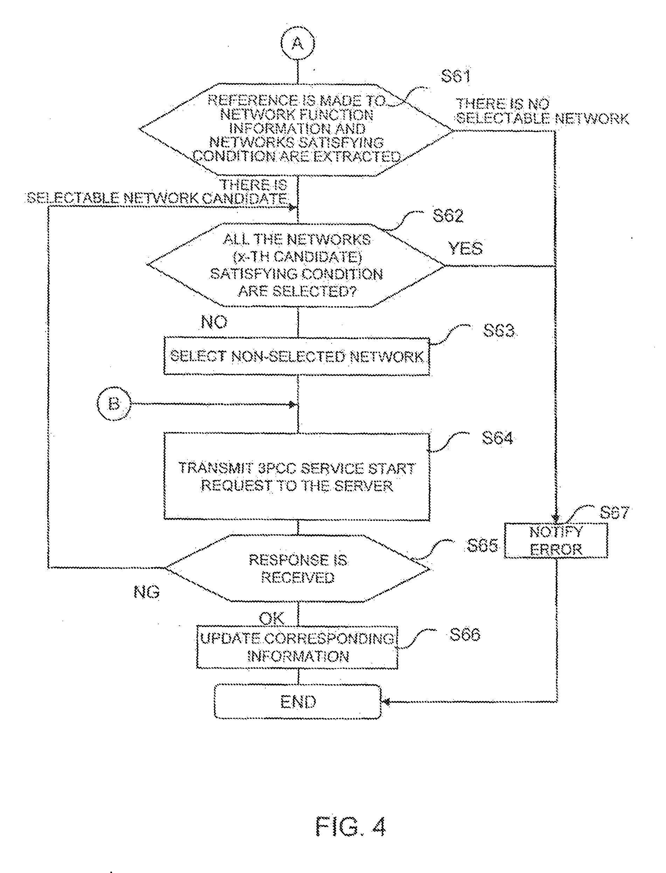

The control processing section 500 (for example, the service provider information management section 50, and the same applies hereinafter at each step of FIG. 3) receives a 3PCC service start request from the service provider N3 (S51). The control processing section 500 determines whether the 3PCC service start request from the service provider N3 is the first access (S52). For example, the control processing section 500 refers to the call service provider identification information 221 of the corresponding information 220 stored in the data storage section 501 based on the identification information of the service provider included in the 3PCC service start request received from the service provider N3. The control processing section 500 can determine that the 3PCC service start request is the first access when the identification information of the service provider does not exist in the call service provider identification information 221. Incidentally, with respect to the determination of whether or not it is the first access, instead of referring to the corresponding information 220, an appropriate method such as setting a flag on the service provider N3 which made an access can be used. When the 3PCC service start request from the service provider N3 is the first access (S52), the control processing section 500 refers to the service provider information 210, and determines whether or not an access can be made (S53). For example, the control processing section 500 refers to the call service provider identification information 211 of the service provider information 210 stored in the data storage section 501 based on the identification information of the service provider included in the 3PCC service start request received from the service provider N3. For example, when the identification information of the service provider exists in the call service provider identification information 211, the control processing section 500 refers to the corresponding 3PCC use contract presence or absence information 212, and determines that an access can be made when it is stored that the 3PCC use contract is present. Thereafter, the process shifts to step S61 of FIG. 4 (A). When an access can not be made to the 3PCC server 4 (S53), the control processing section 500 transmits an error notification to the service provider N3 (S55).

On the other hand, when the 3PCC service start request from the service provider N3 is not the first access (S52), the control processing section 500 refers to the corresponding information 220 (S54). For example, the control processing section 500 refers to the call service provider identification information 221 of the corresponding information 220 stored in the data storage section 501 based on the identification information of the service provider included in the 3PCC service start request received from the service provider N3, and acquires the corresponding 3PCC server address 222. Thereafter, the process shifts to step S64 of FIG. 4 (B).

FIG. 4 is a flowchart (2) of the control processing section 500.

The process of FIG. 4 corresponds to steps S1 to S4 of FIG. 8 and steps S1 to S7 of FIG. 9.

At step S61, the control processing section 500 (for example, the network classification selection section 60, the same applies hereinafter at each step of FIG. 4) refers to the network function information 230, and extracts networks satisfying the condition (S61). For example, based on the network condition information included in the 3PCC service start request received from the service provider N3, the control processing section 500 refers to one or more of the presence or absence information about the priority control 232, the priority control class information 233, the presence or absence information about the redundant line 234, and the presence or absence information about the billing 235 in the network function information 230 stored in the data storage section 501, and extracts the networks satisfying the condition. For example, the control processing section 500 compares the received network condition information with the network function information 230 based on an extraction condition (for example, exact match, partial match, etc.) previously set by an appropriate method, and extracts one or plural networks satisfying the condition. When selectable network candidates exist (S61), the control processing section 500 determines whether all the networks (x-th candidate) satisfying the condition are selected (S62). When non-selected network candidates exist (S62), the control processing section 500 selects one non-selected network (S63). For example, when plural network candidates exist, the control processing section 500 selects a network satisfying the condition based on a priority order previously set by an appropriate method (for example, priority is given to a network candidate without billing). Incidentally, random selection may be performed. The control processing section 500 transmits the 3PCC service start request to the appropriate server (S64). For example, the control processing section 500 acquires the 3PCC server address 236 corresponding to the network selected at step S63 from the network function information 230, and transmits the 3PCC service start request to the address of the acquired 3PCC server address 236. The 3PCC service start request includes, for example, the service classification information included in the 3PCC service start request received from the service provider N3 and the identification information of the user terminal 7. The control processing section 500 receives a response to the 3PCC server start request from the 3PCC server 4 (S65). When the response received from the 3PCC server 4 is a normal response (OK) (S65), the control processing section 500 updates the corresponding information 220 (S66). For example, the control processing section 500 stores the corresponding information 220 including the identification information of the service provider, which is included in the 3PCC service start request received from the service provider N3, and the 3PCC server address from which the normal response is received, into the data storage section 501.

On the other hand, when the received response is an error response (NG), or a response can not be received even after a previously specified time passes (S65), the control processing section 500 returns to step S62, and repeats the subsequent process. When there is no selectable network at step S61 (S61), or when all the networks satisfying the condition are selected at step S62 (S62), the control processing section 500 transmits an error notification to the service provider N3 (S67).

Besides, in the flowchart of FIG. 3, when the service start request from the service provider N3 is not the first access (S52 to B), the control processing section 500 transmits the 3PCC service start request to the address of the 3PCC server acquired at step S54 (S64). Incidentally, the control processing section 500 sends back the service start request response to the service provider N3 at an appropriate timing after step S64.

### 2. Second Embodiment

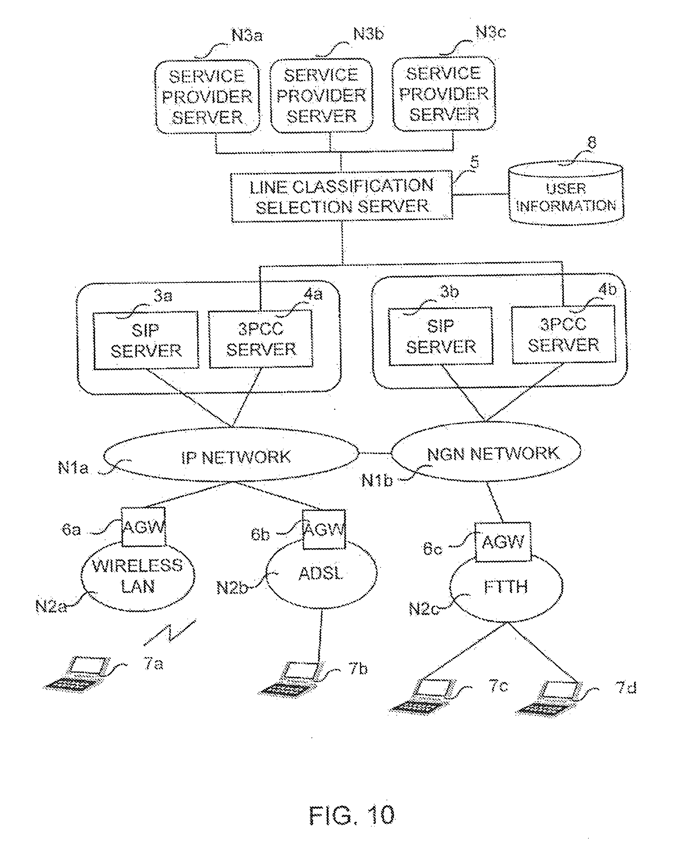

FIG. 10 is a structural view of a network system of a second embodiment.

This network system further includes a user information management device to store user information 8 as compared with, for example, the network system of the first embodiment. The user information management device is connected to, for example, a line classification selection server 5. Incidentally, the user information management device may be constructed of a device different from the line classification selection server 5, or may be constructed such that the user information 8 is stored in a data storage section 501 of the line classification selection server 5.

The line classification selection server 5 further includes, for example, a function to update the user information 8 in a control processing section 500 as compared with the line connection server 5 of the first embodiment. The data storage section 501 may not include the corresponding information 220. The other structure and processing are similar to those of the first embodiment. For example, when newly receiving a service start request, the line classification selection server 5 refers to the user information 8 based on identification information of a user terminal 7 included in the service start request, obtains identification information of a corresponding 3PCC server 4, and transmits the server start request to the 3PCC server 4.

A service provider N3, a SIP server 3, the 3PCC server 4, an AGW 6 and the user terminal 7 are similar to those of the first embodiment.

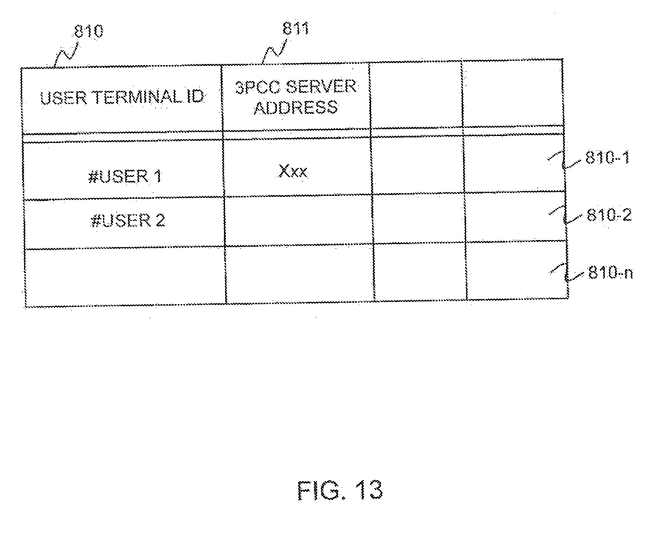

FIG. 13 is an explanatory view of the user information 8.

The user information 8 includes, for example, a user terminal ID 810, and a 3PCC server address 811 corresponding to the user terminal ID 810. The user terminal ID 810 is, for example, the identification information of the user terminal 7 included in the service start request from the service provider N3. As the 3PCC server address 811, for example, the identification information of the 3PCC server 4 from which a confirmation response is received in response to the transmitted server start request or the identification information of the 3PCC server 4 from which an error response is not received in a specified time can be used. Incidentally, the 3PCC server address 811 may be a classification of a network to which the user terminal 7 is connected. As the identification information, for example, appropriate information, such as a symbol, a character or an address, to specify the user terminal 7 or the 3PCC server 4 can be used.

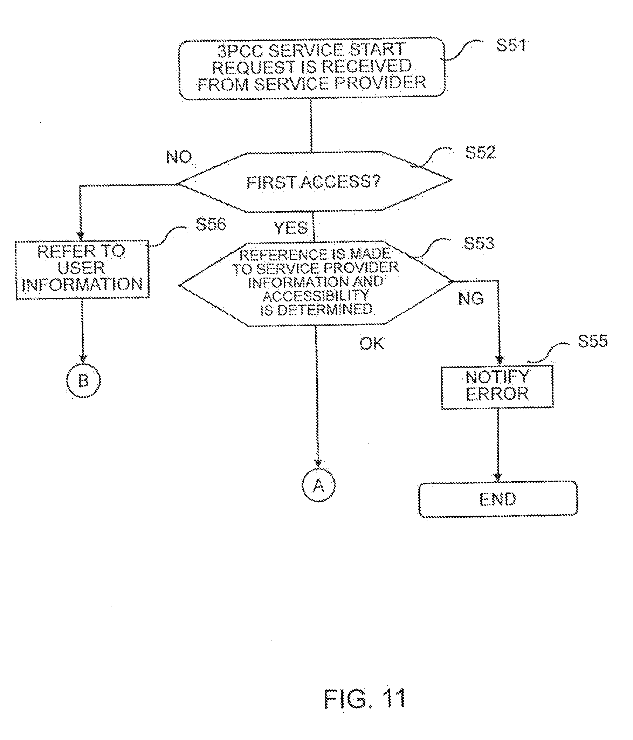

FIG. 11 is a flowchart (1) of the control processing section 500 of the second embodiment.

The process (S51 to S55) other than step S56 is similar to the operation of the first embodiment shown in FIG. 3. Accordingly, hereinafter, the case (S52, No) where the access from the service provider N3 is not the first access will be described, and the description of other steps will be omitted.

For example, similarly to the operation of the first embodiment shown in FIG. 3, the control processing section 500 receives the 3PCC service start request from the service provider N3, and determines whether the 3PCC service start request is the first access (S51 to S52). When it is not the first access (S52), the control processing section refers to the user information 8 and acquires the 3PCC server address (S56). For example, the control processing section 500 refers to the user terminal ID 810 of the user information 8 based on the identification information of the user terminal 7 included in the 3PCC service start request received from the service provider N3. When there exists the user terminal ID 810 coincident with the identification information of the user terminal 7, the control processing section 500 acquires the corresponding 3PCC server address 811. Thereafter, the process shifts to step S64 (B).

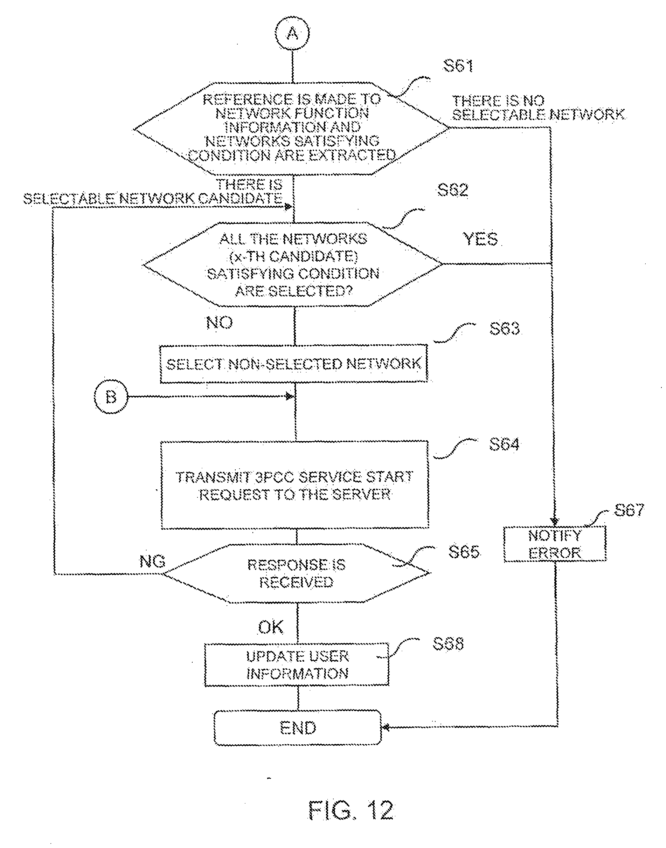

FIG. 12 is a flowchart (2) of the control processing section 500 of the second embodiment.

The process (S61 to S63, S65, S67) other than steps S64 and S68 is similar to the operation of the first embodiment shown in FIG. 4. Hereinafter, the process similar to the operation of the first embodiment will be described in brief, and the detailed description will be omitted.

The control processing section 500 selects, for example, one of the networks satisfying the condition based on the network condition information from the service provider N3 (S61 to S63). The control processing section 500 transmits the 3PCC service start request to the appropriate server (S64). Here, the appropriate server is the 3PCC server of the network selected at step S63 or the server indicated by the 3PCC server address acquired at step S56. The control processing section 500 receives, for example, the response to the 3PCC service start request from the 3PCC server 4 (S65), and updates the user information 8 (S68). For example, the control processing section 500 stores the identification information of the user terminal 7 included in the 3PCC service start request received from the service provider N3 and the 3PCC server address from which the normal response is received at step S65 into the user information management device. Incidentally, as the 3PCC server address 811, instead of the address of the 3PCC server address, other identification information to specify the 3PCC server may be used. When the identification information other than the address is stored in the 3PCC server address 811, for example, the control processing section 500 correlatingly stores the other identification information and the address of the 3PCC server 4 in advance, and acquires the address of the corresponding 3PCC server 4, and transmits the 3PCC service start request.

Incidentally, similarly to the operation of the first embodiment shown in FIG. 4, the control processing section 500 sends back a service start request response to the service provider N3 at an appropriate timing after step S64.

### 3. Third Embodiment

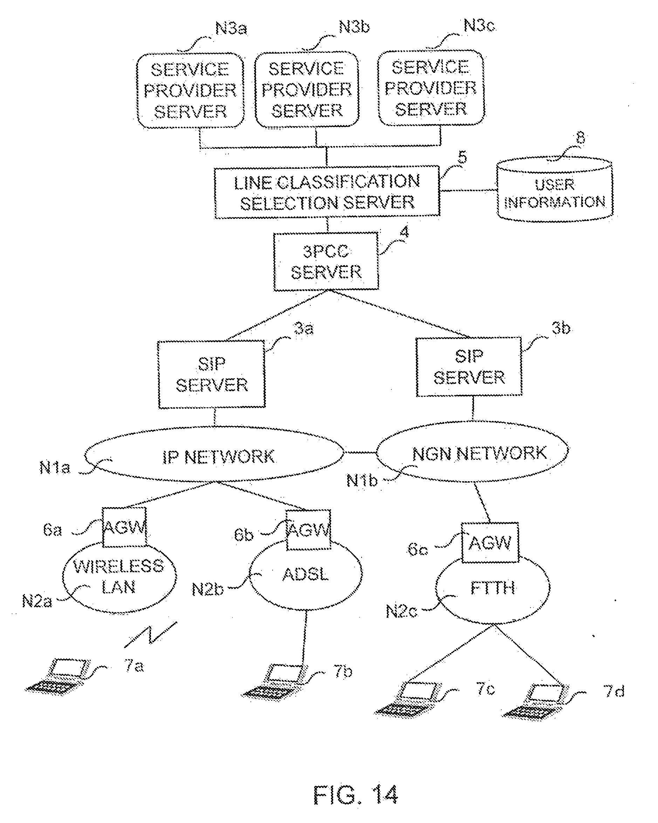

FIG. 14 is a structural view of a network system of a third embodiment.

Although the network system of the second embodiment includes the plural 3PCC servers 4a and 4b for the respective networks, the network system in this embodiment includes one 3PCC server 4 corresponding to a line classification selection server 5. The 3PCC server 4 is connected to, for example, the line classification selection server 5 and SIP servers 3a and 3b. Incidentally, the line classification selection server 5 and the 3PCC server 4 may be constructed of one server.

The structure of the line classification selection server 5 is similar to that of the first or the second embodiment. Incidentally, in this embodiment, the line classification section server 5 transmits a server start request further including a selected network classification to the 3PCC server 4. The 3PCC server 4 communicates with the SIP server 3 corresponding to the network classification included in the server start request, and realizes a communication service to a user terminal 7. A service provider N3, a user information management device to store user information 8, the SIP server 3, an AGW 6 and the user terminal 7 are similar to those of the second embodiment.

The line classification selection server 5 stores network function information including one or both of network communication quality information and billing information for each of network classifications of plural networks. Each of the plural networks is provided with the SIP server 3. The 3PCC server 4 communicates with the SIP server 3, and provides the communication service to the user terminal 7. The line classification selection server 5 receives a service start request including identification information of the service provider N3, service classification information, network condition information including communication quality condition and/or billing condition of a network to be used, and identification information of the user terminal 7 from the service provider N3.

The line classification selection server 5 refers to the network function information based on the network condition information included in the service start request, and selects a network classification satisfying the communication quality condition and/or the billing condition. The line classification selection server 5 transmits the server start request including the service classification information, the identification information of the user terminal 7, and the selected network classification to the 3PCC server 4. The 3PCC server 4 receives the server start request, communicates with the SIP server 3 corresponding to the selected network classification, and performs communication control for providing the communication service corresponding to the service classification information to the user terminal 7 indicated by the identification information of the user terminal 7.

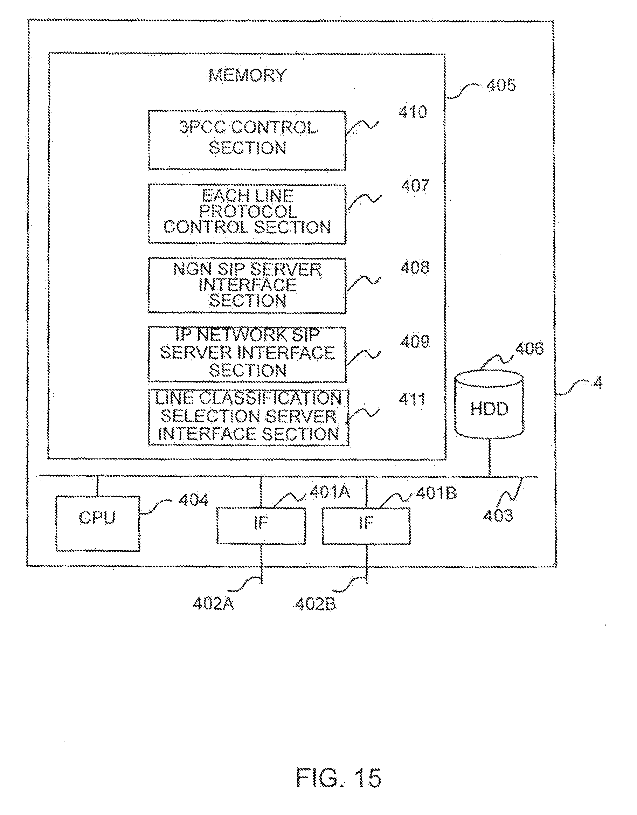

FIG. 15 is a structural view of the 3PCC server 4.

The 3PCC server 4 includes, for example, IFs 401A and 401B, a CPU 404, a memory 405 and an HDD 406. The memory 405 includes control sections and interface sections, and includes, for example, a 3PCC control section 410, an each line protocol control section 407, an NGN SIP server interface section 408, an IP network SIP server interface section 409, and a line classification selection server interface section 411. The process of the 3PCC control section 410, the each line protocol control section 407, the NGN SIP server interface section 408, the IP network SIP server interface section 409, and the line classification selection server interface section 411 can be executed by, for example, the CPU 404.

The IFs 401A and 401B, the CPU 404, the memory 405 and the HDD 406 are mutually connected through an inner bus 403.

The IFs 401A and 401B are interfaces to communicate with the line classification selection server and the SIP server 3 through lines 402A and 402B. The CPU 404 executes, for example, various processes in the 3PCC server 4. The HDD 406 stores, for example, various data in the 3PCC server 4.

The each line protocol control section 407 performs, for example, protocol (SIP) control for the SIP server 3. Since there is a case where the protocol control varies for each of the NGN and the IP network, here, the control is performed for each line. The 3PCC control section 410 performs, for example, a 3PCC control. Specifically, a call is made to the user terminals 7 according to the request from the service provider N3, and establishes a communication session between the user terminals 7. The NGN SIP server interface section 408 is, for example, the interface to communicate with the SIP server 3b connected to the NGN network through the IF 401A or 401B. The IP network SIP server interface section 409 is, for example, the interface to communicate with the SIP server 3a connected to the IP network through the IF 401A or 401B. The line classification selection server interface section 411 is, for example, the interface to communicate with the line classification selection server 5 through the IF 401A or 401B.

### 4. Fourth Embodiment

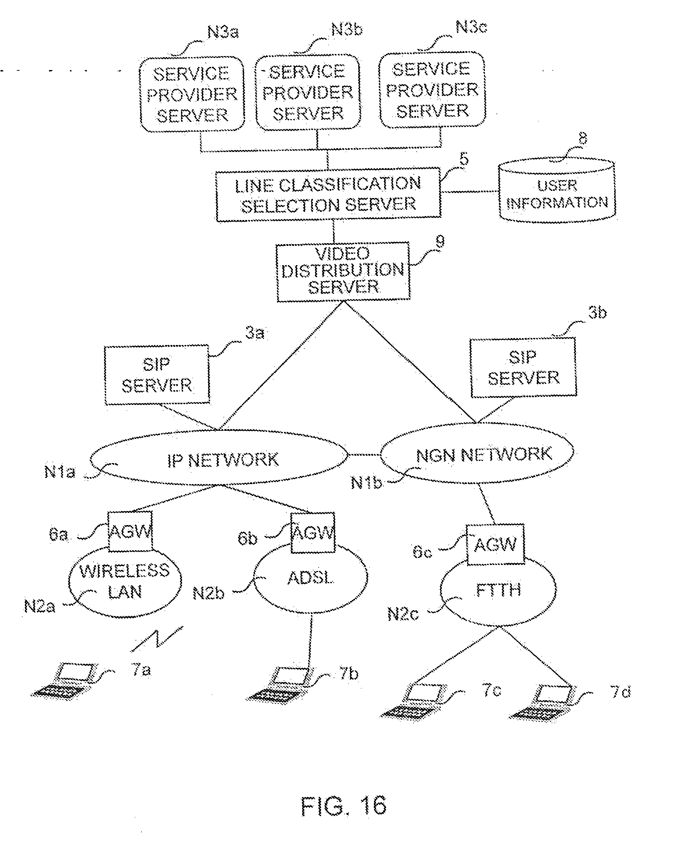

FIG. 16 is a structural view of a network system of a fourth embodiment.

This network system includes a video distribution server 9 instead of the 3PCC server 4 in the network system of the third embodiment. The video distribution server 9 is connected to, for example, a line classification selection server 5, an IP network N1a and an NGN network N1b. In the illustrated example, the line classification selection server 5 is connected to a SIP server 3a through the IP network N1a, and is connected to a SIP server 3b through the NGN network N1b.

The video distribution server 9 delivers, for example, video data to a user terminal 7 connected to a network indicated by a specified network classification. The line classification selection server 5 transmits, for example, a service start request including video classification information, instead of the service start request including the service classification information in the third embodiment, to the video server 9. Incidentally, a service provider N3, a management device to store user information 8, the SIP server 3, an AGW 6 and the user terminal 7 are similar to those of the third embodiment.

The line classification selection server 5 stores network information including one or both of network communication quality information and billing information for each of the network classifications of plural networks. The video distribution server 9 delivers video data to the user terminal 7. The line classification selection server 5 receives the service start request including the identification information of the service provider N3, the video classification information, the network condition information including the communication quality condition and/or billing condition of the network to be used, and the identification information of the user terminal 7. The line classification selection server 5 refers to the network function information based on the network condition information included in the service start request, and selects the network classification satisfying the communication quality condition and/or the billing condition. The line classification selection server 5 transmits a server start request including the video classification information, the identification information of the user terminal 7, and the selected network classification to the video distribution server 9. The video distribution server 9 receives the server start request, and delivers the video data corresponding to the video classification information to the user terminal 7 corresponding to the identification information of the user terminal 7 through the network indicated by the selected network classification. Incidentally, the video distribution server 9 may deliver the video data through the SIP server 3.

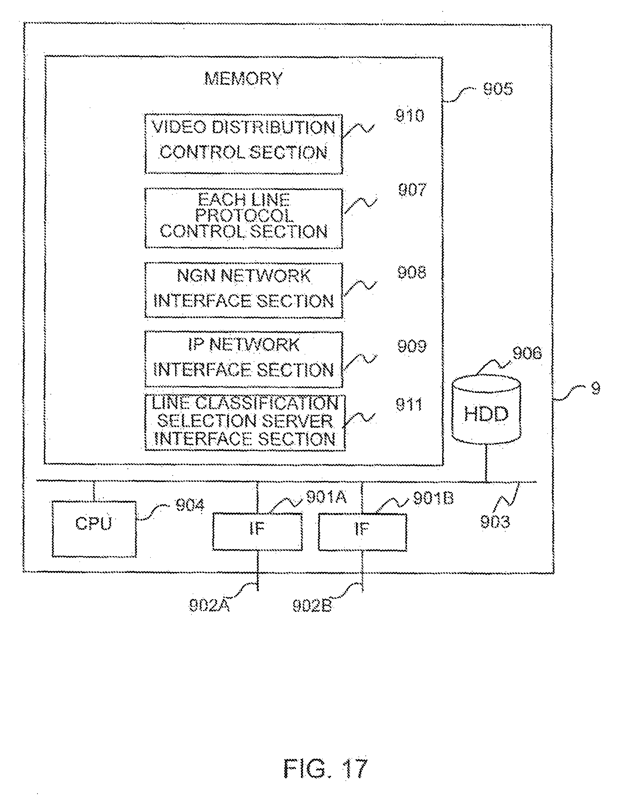

FIG. 17 is a structural view of the video distribution server 9.

The video distribution server 9 includes, for example, IFs 901A and 901B, a CPU 904, a memory 905, and an HDD 906. The memory 905 includes control sections and interface sections, and includes, for example, a video distribution control section 910, an each line protocol control section 907, an NGN network interface section 908, an IP network interface section 909, and a line classification selection server interface section 911. The process of the video distribution control section 910, the each line protocol control section 907, the NGN interface section 908, the IP network interface section 909, and the line classification selection server interface section 911 can be executed by, for example, the CPU 904.

The IFs 901A and 901B, the CPU 904, the memory 905 and the HDD 906 are mutually connected through an inner bus 903.

The video distribution control section 910 delivers the video data to the user terminal 7 in accordance with the video classification information received from the line classification selection server 5. The NGN network interface section 908 is, for example, the interface to communicate with the NGN network through the IF 901A or 901B. The IP network interface section 909 is, for example, the interface to communicate with the IP network through the IF 901A or 901B. Incidentally, the IF 901, the CPU 904, the HDD 906, the each line protocol control section 907, and the line classification selection server interface section 911 are similar to the IF 401, the CPU 404, the HDD 406, the each line protocol control section 407, and the line classification selection server interface section 411 of the third embodiment.

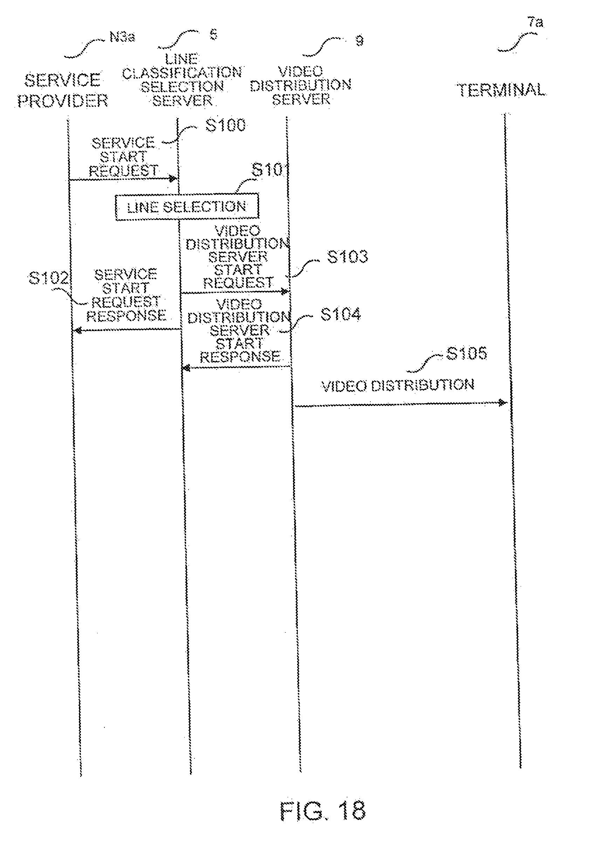

FIG. 18 is a sequence view at the time of video distribution.

The service provider N3a transmits the service start request to the line classification selection server 5 (S100). The service start request includes, for example, the identification information of the service provider, the video classification information, the network condition information and the identification information of the user terminal 7. The line classification selection server 5 selects a network and a line (S101). For example, the line classification selection server 5 selects the network satisfying the condition based on the network condition information included in the received service start request, and selects the line for communicating with the selected network. The selection of the line is similar to that of the first embodiment. The line classification selection server 5 transmits a service start request response to the service provider N3a (S102). The line classification selection server 5 transmits a video distribution server start request to the video distribution server 9 (S103). The video distribution server start request includes, for example, the video classification information and the identification information of the user terminal 7 included in the service start request received from the service provider N3a, and the selected network classification. The video distribution server 9 transmits a video distribution server start response to the line classification selection server 5 (S104). For example, the video distribution server 9 transmits the video distribution server start response indicating a normal response to the line classification selection server 5 when the specified user terminal 7 is connected to its own network and the video data corresponding to the specified video classification can be provided. The line classification selection server 5 updates the user information 8 similarly to the second and the third embodiments. The video distribution server 9 delivers the video data to the user terminal 7 (S105). For example, the video distribution server 9 delivers the video data corresponding to the video classification information included in the received video distribution server start request to the user terminal 7 corresponding to the identification information of the user terminal 7 through the network indicated by the selected network classification.

### 5. Others

According to the first to the fourth embodiments, a communication system can be provided in which one of plural network classifications or plural line classifications is selected for one network function and can be used. Besides, according to the first to the fourth embodiments, it is not necessary for a service provider to grasp a line classification presently used by a user.

The invention can be applied to a communication system to provide network functions to plural service providers.

Features, components and specific details of the structures of the above-described embodiments may be exchanged or combined to form further embodiments optimized for the respective application. As far as those modifications are readily apparent for an expert skilled in the art they shall be disclosed implicitly by the above description without specifying explicitly every possible combination, for the sake of conciseness of the present description.

## Claims

1. A communication system comprising:
a line classification selection server (5) which stores, for each of network classifications of a plurality of networks, network information Including one or both of communication quality Information and billing information of the network; and
a plurality of communication control servers (4a, 4b) provided for the plurality of networks, respectively, and for providing communication services to user terminals (7a, 7b, 7c, 7d),
wherein
the line classification selection server (5) receives, from a communication device of a service provider, a service start request including service classification information, network condition information including a communication quality condition and/or a billing condition of a network to be used, and identification information of the user terminal,
the line classification selection server (5) refers to the network information based on the network condition information included in the service start request and selects a network classification satisfying the communication quality condition and/or the billing condition,
the line classification selection server (5) transmits a server start request including the service classification information and the identification information of the user terminal to the communication control server (4a, 4b) of the network corresponding to the selected network classification, and
the communication control server (4a, 4b) receives the server start request, and performs communication control for providing a communication service corresponding to the service classification information to the user terminal corresponding to the identification information of the user terminal (7a, 7b, 7c, 7d),
wherein
the communication quality information includes one or more of presence or absence information of priority control (232), priority control class information (233), and presence or absence information of a redundant circuit (234), and
the billing information includes presence or absence information of billing (235) due to use of the network.

2. The communication system according to claim 1, wherein
the line classification selection server (5) includes data storage section (501) which stores service provider information (210) in which identification information of the service provider is correlated with usability information indicating whether the communication control server (4a, 4b) can be used, and corresponding server information (220) in which the identification information of the service provider is correlated with the identification information of the communication control server with which communication was performed in the past,
wherein
when receiving the service start request further including the identification information of the service provider from the communication device of the service provider, the line classification selection server (5) determines whether it is a first access from the communication device of the service provider,
when it is the first access, the line classification selection server (5) refers, based on the identification information of the service provider, to the service provider information (210) and determines whether the communication control server (4a, 4b) can be used, and correlates the identification information of the communication control server (4a, 4b) of the network indicated by the selected network classification with the identification information of the service provider and stores them in the corresponding server information (220), and
when it is not the first access, the line classification selection server (5) refers to the corresponding server information (220) to acquire the identification information of the communication control server corresponding to the identification information of the service provider, and transmits the server start request in accordance with the identification information of the communication control server.

3. The communication system according to at least one of the preceding claims, wherein
the Identification information of the communication control server (4a, 4b) stored In the corresponding server information (220) is the identification information of the communication control server from which a confirmation response to the server start request is received, or the identification information of the communication control server from which an error response to the server start request is not received.

4. The communication system according to at least one of the preceding claims, wherein
when a plurality of network classifications are selected, the line classification selection server (5) transmits the server start request to the communication control server of one network of the selected plurality of network classifications, and
when receiving an error response which is transmitted in a case that the user terminal (7a, 7b, 7c, 7d) is not connected to the network of the communication control server, the line classification selection server (5) transmits the server start request to the communication control server of another network of the selected plurality of network classifications.

5. The communication system according to at least one of the preceding claims, further comprising
a user information management device which stores the identification information of the communication control server from which a confirmation response is received in response to the transmitted server start request or the Identification information of the communication control server from which an error response is not received corresponding to the identification information of the user terminal included in the service start request,
wherein, when newly receiving a service start request, the line classification selection server refers to the user information management device based on the identification information of the user terminal included in the service start request, obtains the identification information of corresponding communication control server, and transmits the server start request to the communication control server.

6. The communication system according to at least one of the preceding claims, further comprising
a session initiation protocol server (3a, 3b) provided for each of the plurality of networks, wherein the communication control server (4a, 4b) communicates with the session initiation protocol server (3a, 3b) of the same network to provide the communication service to the user terminal (7a, 7b, 7c, 7d).

7. A communication system comprising:
a line classification selection server (5) which stores, for each of network classifications of a plurality of networks, network information including one or both of communication quality information and billing information of the network; and
session initiation protocol servers (3a, 3b) provided for each of the plurality of networks; and
a communication control server (4a, 4b) which communicates with the session initiation protocol servers (3a, 3b) to provide a communication service to a user terminal (7a, 7b, 7c, 7d),
wherein
the line classifications selection server (5) receives, from a communication device of a service provider, a service start request including service classification information, network condition information including a communication quality condition and/or a billing condition of a network to be used, and identification information of the user terminal,
the line classification selection server (5) refers to the network information based on the network condition information included in the service start request and selects a network classification satisfying the communication quality condition and/or the billing condition,
the line classification selection server (5) transmits a server start request including the service classification information, the identification information of the user terminal and selected network classification to the communication control server (4a, 4b), and
the communication control server receives the server start request, and communicates with the session initiation protocol server (3a, 3b) corresponding to the selected network classification, to perform communication control for providing the communication service corresponding to the service classification information to the user terminal corresponding to the identification information of the user terminal (7a, 7b, 7c, 7d),
wherein
the communication quality information includes one or more of presence or absence information of priority control (232), priority control class information (233), and presence or absence information of a redundant circuit (234), and
the billing information includes presence or absence information of billing (235) due to use of the network.

8. A communication system comprising:
a line classification selection server (5) which stores, for each of network classifications of a plurality of networks, network information including one or both of communication quality information and billing information of the network; and
a video distribution server (9) for distributing video data to user terminals through a network selected from the plurality of networks,
wherein
the line classification selection server (5) receives, from a communication device of a service provider, a service start request including video classification information, network condition information including a communication quality condition and/or a billing condition of a network to be used, and identification information of the user terminal,
the the classification selection server (5) refers to the network information based on the network condition information included in the service start request and selects a network classification satisfying the communication quality condition and/or the billing condition,
the line classification selection server (5) transmits a server start request including the video classification information, the identification information of the user terminal and selected network classification to the video distribution server (9), and
the video distribution server (9) receives the server start request, and distributes video data corresponding to the video classification information to the user terminal corresponding to the identification information of the user terminal through the network of the selected network classification,
wherein
the communication quality information includes one or more of presence or absence information of priority control (232), priority control class information (233), and presence or absence information of a redundant circuit (234), and
the billing information includes presence or absence information of billing (235) due to use of the network.

## Patentansprüche

1. Kommunikationssystem mit:
einem Leitungsklassifikations-Auswahlserver (5), der für jede von Netzklassifikationen mehrerer Netze Netzinformation speichert, die von Kommunikationsqualitätsinformation und Gebührenerfassungsinformation des Netzes eine oder beide einschließt; und
mehreren Kommunikationssteuerungsservern (4a, 4b), die jeweils für die mehreren Netze und zum Liefern von Kommunikationsdienstleistungen an Benutzerendgeräte (7a, 7b, 7c, 7d) bereitgestellt sind,
wobei
der Leitungsklassifikations-Auswahlserver (5) von einer Kommunikationsvorrichtung eines Dienstleistungsproviders eine Dienstleistungsstartanforderung empfängt, die Dienstleistungsklassifikationsinformation, Netzzustandsinformation einschließlich eines Kommunikationsqualitätszustands und/oder eines Gebührenerfassungszustands eines zu verwendenden Netzes sowie ldentifikationsinformation des Benutzerendgeräts beinhaltet,
der Leitungsklassifikations-Auswahlserver (5) auf die Netzinformation auf der Basis der Netzzustandsinformation Bezug nimmt, die in der Dienstleistungsstartanforderung beinhaltet ist, und eine Netzklassifikation auswählt, die den Kommunikationqualitätszustand und/oder den Gebührenerfassungszustand erfüllt,
der Leitungsklassifikations-Auswahlserver (5) eine Serverstartanforderung, die die Dienstleistungsklassifikationsinformation und die Identifikationsinformation des Benutzerendgeräts einschließt, an den Kommunikationssteuerungsserver (4a, 4b) des Netzes überträgt, das der ausgewählten Netzklassifikation entspricht, und
der Kommunikationssteuerungsserver (4a, 4b) die Serverstartanforderung empfängt und eine Kommunikationssteuerung durchführt, um eine Kommunikationsdienstleistung, die der Dienstleistungsklassifikationsinformation entspricht, dem Benutzerendgerät bereitzustellen, die der Identifikationsinformation des Benutzerendgeräts (7a, 7b, 7c, 7d) entspricht,
wobei
die Kommunikationsqualitätsinformation von einer Anwesenheits- oder Abwesenheitsinformation einer Prioritätssteuerung (232), Prioritätssteuerungsklasseninformation (233) und Anwesenheits- oder Abwesenheitsinformation einer redundanten Schaltung (234) eine oder mehrere einschließt, und
die Gebührenerfassungsinformation die Anwesenheits- oder Abwesenheitsinformation einer Rechnungstellung (235) aufgrund der Verwendung des Netzes einschließt.

2. Kommunikationssystem nach Anspruch 1, wobei
der Leitungsklassifikations-Auswahlserver (5) einen Datenspeicherabschnitt (501) einschließt, welcher Dienstleistungsproviderinformation (210) speichert, in welcher Identifikationsinformation des Dienstleistungsproviders mit Nutzbarkeitsinformation korreliert ist, welche angibt, ob der Kommunikationssteuerungsserver (4a, 4b) verwendet werden kann, und entsprechende Serverinformation (220) speichert, in welcher die ldentifikationsinformation des Dienstleistungsproviders mit der Identifikationsinformation des Kommunikationssteuerungsservers korreliert ist, mit welchem in der Vergangenheit eine Kommunikation erfolgte,
wobei,
wenn der Leitungsklassifikations-Auswahlserver (5) die Dienstleistungsstartanforderung, die ferner die Identifikationsinformation des Dienstleistungsproviders einschließt, von der Kommunikationsvorrichtung des Dienstleistungsproviders empfängt, der Leitungsklassifikations-Auswahlserver (5) bestimmt, ob es sich um einen ersten Zugriff von der Kommunikationsvorrichtung des Dienstleistungsproviders handelt,
der Leitungsklassifikations-Auswahlserver (5), wenn es sich um den ersten Zugriff handelt, auf der Basis der Identifikationsinformation des Dienstleistungsproviders auf die Dienstleistungsproviderinformation (210) Bezug nimmt und bestimmt, ob der Kommunikationssteuerungsserver (4a, 4b) verwendet werden kann, und die Identifikationsinformation des Kommunikationssteuerungsservers (4a, 4b) des Netzes, das durch die ausgewählte Netzklassifikation angegeben ist, mit der Identifikationsinformation des Dienstleistungsproviders korreliert und sie in der entsprechenden Serverinformation (220) speichert, und,
der Leitungsklassifikations-Auswahlserver (5), wenn es sich nicht um den ersten Zugriff handelt, auf die entsprechende Serverinformation (220) Bezug nimmt, um die Identifikationsinformation des Kommunikationssteuerungsservers zu erfassen, die der Identifikationsinformation des Dienstleistungsproviders entspricht, und die Serverstartanforderung gemäß der Identifikationsinformation des Kommunikationssteuerungsservers überträgt.

3. Kommunikationssystem nach mindestens einem der vorhergehenden Ansprüche, wobei
die Identifikationsinformation des Kommunikationssteuerungsservers (4a, 4b), die in der entsprechenden Serverinformation (220) gespeichert ist, die Identifikationsinformation des Kommünikationssteuerungsservers ist, von welchem eine Bestätigungsantwort auf die Serverstartanforderung empfangen wird, oder die Identifikationsinformation des Kommunikationssteuerungsservers ist, von welchem eine Fehlerantwort auf die Serverstartanforderung nicht empfangen wird.

4. Kommunikationssystem nach mindestens einem der vorhergehenden Ansprüche, wobei,
wenn mehrere Netzklassifikationen ausgewählt sind, der Leitungsklassifikations-Auswahlserver (5) die Serverstartanforderung an den Kommunikationssteuerungsserver von einem Netz der ausgewählten mehreren Netzklassifikationen überträgt, und,
wenn der Leitungsklassifikations-Auswahlserver (5) eine Fehlerantwort empfängt, die in einem Fall übertragen wird, dass das Benutzerendgerät (7a, 7b, 7c, 7d) nicht mit dem Netz des Kommunikationssteuerungsservers verbunden ist, der Leitungsklassifikations-Auswahlserver (5) die Serverstartanforderung an den Kommunikationssteuerungsserver eines anderen Netzes der ausgewählten mehreren Netzklassifikationen überträgt.

5. Kommunikationssystem nach mindestens einem der vorhergehenden Ansprüche, ferner mit
einer Benutzerinformations-Verwaltungsvorrichtung, die die Identifikationsinformation des Kommunikationssteuerungsservers speichert, von welchem eine Bestätigungsantwort als Reaktion auf die übertragene Serverstartanforderung empfangen wird, oder die Identifikationsinformation des Kommunikationssteuerungsservers speichert, von welchem eine Fehlerantwort nicht empfangen wird, die der Identifikationsinformation des Benutzerendgeräts entspricht, die in der Dienstleistungstartanfor.derung beinhaltet ist,
wobei, wenn der Leitungsklassifikations-Auswahlserver eine Dienstleistungsstartanfrage neu empfängt, auf die Benutzerinformations-Verwaltungsvorrichtung auf der Basis der Identifikationsinformation des Benutzerendgeräts Bezug nimmt, die in der Dienstleistungsstartanforderung beinhaltet ist, die Identifikationsinformation des entsprechenden Kommunikationssteuerungsservers ermittelt und die Serverstartanforderung an den Kommunikationssteuerungsserver überträgt.

6. Kommunikationssystem nach mindestens einem der vorhergehenden Ansprüche, ferner mit
einem Sitzungsinitiations-Protokollserver (3a, 3b), der für jedes der mehreren Netze vorgesehen ist,
wobei der Kommunikationssteuerungsserver (4a, 4b) mit dem Sitzungsinitiations-Protokollserver (3a, 3b) desselben Netzes kommuniziert, um dem Benutzerendgerät (7a, 7b, 7c, 7d) die Kommunikationsdienstleistung zur Verfügung zu stellen.

7. Kommunikationssystem mit:
einem Leitungsklassifikations-Auswahlserver (5), der für jede von Netzklassifikationen mehrerer Netze Netzinformation speichert, die von Kommunikationsqualitätsinformation und Gebührenerfassungsinformation des Netzes eine oder beide einschließt; und
Sitzungsinitiations-Protokollservern (3a, 3b), die für jedes der mehreren Netze vorgesehen sind; und
einem Kommunikationssteuerungsserver (4a, 4b), der mit den Sitzungsinitiations-Protokollservern (3a, 3b) kommuniziert, um einem Benutzerendgerät (7a, 7b, 7c, 7d) eine Kommunikationsdienstleistung zur Verfügung zu stellen,
wobei
der Leitungsklassifikations-Auswahlserver (5) von einer Kommunikationsvorrichtung eines Dienstleistungsproviders eine Dienstleistungsstartanforderung empfängt, die Dienstleistungsklassifikationsinformation, Netzzustandsinformation einschließlich eines Kommunikationsqualitätszustands und/oder eines Gebührenerfassungszustands eines zu verwendenden Netzes sowie Identifikationsinformation des Benutzerendgeräts beinhaltet,
der Leitungsklassifikations-Auswahlserver (5) auf die Netzinformation auf der Basis der Netzzustandsinformation Bezug nimmt, die in der Dienstleistungsstartanforderung beinhaltet ist, und eine Netzklassifikation auswählt, die den Kommunikationsqualitätszustand und/oder den Gebührenerfassungszustand erfüllt,
der Leitungsklassifikations-Auswahlserver (5) eine Serverstartanforderung, die die Dienstleistungsklassifikationsinformation, die Identifikationsinformation des Benutzerendgeräts und ausgewählte Netzklassifikation einschließt, an den Kommunikationssteuerungsserver (4a, 4b) überträgt, und
der Kommunikationssteuerungsserver die Serverstartanforderung empfängt und mit dem Sitzungsin.itiations-Protokollserver (3a, 3b) kommuniziert, der der ausgewählten Netzklassifikation entspricht, um eine Kommunikationssteuerung durchzuführen, um die Kommunikationsdienstleistung, die der Dienstleistungsklassifikationsinformation entspricht, dem Benutzerendgerät bereitzustellen, die der Identifikationsinformation des Benutzerendgeräts (7a, 7b, 7c, 7d) entspricht,
wobei
die Kommunikationsqualitätsinformation von einer Anwesenheits- oder Abwesenheitsinformation einer Prioritätssteuerung (232), Prioritätssteuerungsklasseninformation (233) und Anwesenheits- oder Abwesenheitsinförmation einer redundanten Schaltung (234) eine oder mehrere einschließt, und
die Gebührenerfassungsinformation die Anwesenheits- oder Abwesenheitsinformation einer Rechnungstellung (235) aufgrund der Verwendung des Netzes einschließt.

8. Kommunikationssystem mit:
einem Leitungsklassifikations-Auswahlserver (5), der für jede von Netzklassifikationen mehrerer Netze Netzinformation speichert, die von Kommunikationsqualitätsinformation und Gebührenerfassungsinformation des Netzes eine oder beide einschließt; und
einem Videoverteilungsserver (9) zum Verteilen von Videodaten an Benutzerendgeräte durch ein Netz, das aus den mehreren Netzen ausgewählt ist,
wobei
der Leitungsklassifikations-Auswahlserver (5) von einer Kommunikationsvorrichtung eines Dienstleistungsproviders eine Dienstleistungsstartanforderung empfängt, die Videoklassifizierurigsinformation, Netzzustandsinformation einschließlich eines Kommunikationsqualitätszustands und/oder eines Gebührenerfassungszustands eines zu verwendenden Netzes sowie Identifikationsinformation des Benutzerendgeräts beinhaltet,
der Leitungsklassifikations-Auswahlserver (5) auf die Netzinformation auf der Basis der Netzzustandsinformation Bezug nimmt, die in der Dienstleistungsstartanforderung beinhaltet ist, und eine Netzklassifikation auswählt, die den Kommunikationsqualitätszustand und/oder den Gebührenerfassungszustand erfüllt,
der Leitungsklassifikations-Auswahlserver (5) eine Serverstartanforderung, die die Videoklassifikationsinformation, die Identifikationsinformation des Benutzerendgeräts und ausgewählte Netzklassifikation einschließt, an den Videoverteilungsserver (9) überträgt, und
der Videoverteilungsserver (9) die Serverstartanforderung empfängt und Videodaten, die der Videoklassifikationsinformation entsprechen, an das Beriutzerendgerät, die der Identifikationsinformation des Benutzerendgeräts entspricht, durch das Netz der ausgewählten Netzklassifikation verteilt,
wobei
die Kommunikationsqualitätsinformation von einer Anwesenheits- oder Abwesenheitsinformation einer Prioritätssteuerung (232), Prioritätssteuerungsklasseninformation (233) und Anwesenheits- oder Abwesenheitsinformation einer redundanten Schaltung (234) eine oder mehrere einschließt, und
die Gebührenerfassungsinformation die Anwesenheit- oder Abwesenheitsinformation einer Rechnungstellung (235) aufgrund der Verwendung des Netzes einschließt.

## Revendications

1. Système de communication, comprenant :
un serveur de sélection de classification de ligne (5) qui stocke, pour chacune des classifications de réseau d'une pluralité de réseaux, des informations de réseau incluant soit des informations de qualité de communication soit des informations de facturation, soit encore les deux, du réseau ; et
une pluralité de serveurs de commande de communication (4a, 4b) prévus pour la pluralité de réseaux, respectivement, et pour fournir des services de communication à des terminaux utilisateurs (7a, 7b, 7c, 7d),
dans lequel
le serveur de sélection de classification de ligne (5) reçoit, depuis un dispositif de communication d'un fournisseur de services, une requête de démarrage de service incluant des informations de classification de service, des informations de conditions de réseau incluant une condition de qualité de communication et/ou les conditions de facturation d'un réseau à utiliser, et des informations d'identification du terminal utilisateur,
le serveur de sélection de classification de ligne (5) se réfère aux informations de réseau basées sur les informations de conditions de réseau inclues dans la requête de démarrage de service et sélectionne une classification de réseau qui satisfait la condition de qualité de communication et/ou la condition de facturation,
le serveur de sélection de classification de ligne (5) transmet une requête de démarrage de serveur incluant les informations de classification de service et les informations d'identification au terminal utilisateur vers le serveur de commande de communication (4a, 4b) du réseau correspondant à la classification de réseau sélectionné, et
le serveur de commande de communication (4a, 4b) reçoit la requête de démarrage de serveur, et exécute une commande de communication pour fournir un service de communication correspondant aux informations de classification de service au terminal utilisateur correspondant aux informations d'identification du terminal utilisateur (7a, 7b, 7c, 7b),
dans lequel
les informations de qualité de communication incluent une ou plusieurs informations de présence ou d'absence de commande de priorité (232), informations de classe de commande de priorité (233), et informations de présence ou d'absence d'un circuit redondant (234), et
les informations de facturation incluent des informations de présence ou d'absence de facturation (235) en raison de l'utilisation du réseau.

2. Système de communication selon la revendication 1, dans lequel
le serveur de sélection de classification de ligne (5) inclut une section de stockage de données (501) qui stocke des informations de fournisseur de services (210) dans lesquelles des informations d'identification du fournisseur de services sont mises en corrélation avec des informations de faculté d'utilisation indiquant si le serveur de commande de communication (4a, 4b) peut être utilisé, et des informations de serveur correspondantes (220) dans lesquelles les informations d'identification du fournisseur de services sont mises en corrélation avec les informations d'identification du serveur de commande de communication avec lequel une communication a été réalisée dans le passé,
dans lequel
lorsqu'il reçoit la requête de démarrage de service incluant en outre les informations d'identification du fournisseur de services depuis le dispositif de communication du fournisseur de services, le serveur de sélection de classification de ligne (5) détermine s'il s'agit d'un premier accès depuis le dispositif de communication du fournisseur de services, s'il s'agit du premier accès, le serveur de sélection de classification de ligne (5) se réfère, sur la base des informations d'identification du fournisseur de services, aux informations du fournisseur de services (210) et détermine si le serveur de commande de communication (4a, 4b) peut être utilisé, et met en corrélation les informations d'identification du serveur de commande de communication (4a, 4b) du réseau indiqué par la classification de réseau sélectionné avec les informations d'identification du fournisseur de services, et les stocke dans les informations de serveur correspondantes (220), et
s'il ne s'agit pas du premier accès, le serveur de sélection de classification (5) se réfère aux informations de serveur correspondantes (220) pour acquérir les informations d'identification du serveur de commande de communication correspondant aux informations d'identification du fournisseur de services, et transmet la requête de démarrage de serveur en accord avec les informations d'identification du serveur de commande de communication.

3. Système de communication selon l'une au moins des revendications précédentes, dans lequel
les informations d'identification du serveur de commande de communication (4a, 4b) stockées dans les informations de serveur correspondantes (220) sont les informations d'identification du serveur de commande de communication depuis lequel une réponse de confirmation à la requête de démarrage de serveur est reçue, ou les informations d'identification du serveur de commande de communication depuis lequel une réponse d'erreur à la requête de démarrage de serveur n'est pas reçue.

4. Système de communication selon l'une au moins des revendications précédentes, dans lequel
quand une pluralité de classifications de réseau sont sélectionnées, le serveur de sélection de classification de ligne (5) transmet la requête de démarrage de serveur au serveur de commande de communication d'un réseau de la pluralité sélectionnée de classifications de réseau, et
lorsqu'il reçoit une réponse d'erreur qui est transmise, dans un cas où le terminal utilisateur (7a, 7b, 7c, 7d) n'est pas connecté au réseau du serveur de commande de communication, le serveur de sélection de classification de ligne (5) transmet la requête de démarrage de serveur au serveur de commande de communication d'un autre réseau de la pluralité sélectionnée de classifications de réseau.

5. Système de communication selon l'une au moins des revendications précédentes, comprenant en outre :
un dispositif de gestion d'information utilisateur qui stocke les informations d'identification du serveur de commande de communication depuis lequel une réponse de confirmation est reçue en réponse à la requête de démarrage de serveur transmise ou les informations d'identification du serveur de commande de communication depuis lequel une réponse d'erreur n'est pas reçue en correspondance des informations d'identification du terminal utilisateur inclues dans la requête de démarrage de service,
dans lequel, lorsqu'il reçoit nouvellement une requête de démarrage de service, le serveur de sélection de classification de ligne se réfère au dispositif de gestion d'informations utilisateur basées sur les informations d'identification du terminal utilisateur inclues dans la requête de démarrage de service, obtient les informations d'identification du serveur de commande de communication correspondant, et transmet la requête de démarrage de serveur au serveur de commande de communication.

6. Système de communication selon l'une au moins des revendications précédentes, comprenant en outre :
un serveur de protocole d'initialisation de session (3a, 3b) prévu pour chacun de la pluralité de réseaux,
dans lequel le serveur de commande de communication (4a, 4b) communique avec le serveur de protocole d'initialisation de session (3a, 3b) du même réseau pour fournir le service de communication au terminal utilisateur (7a, 7b, 7c, 7d).

7. Système de communication comprenant :
un serveur de sélection de classification de ligne (5) qui stocke, pour chacune des classifications de réseau d'une pluralité de réseaux, des informations de réseau incluant soit des informations de qualité de communication soit des informations de facturation, soit encore les deux, du réseau ; et
des serveurs de protocole d'initialisation de session (3a, 3b) prévus pour chacun de la pluralité de réseaux ; et
un serveur de commande de communication (4a, 4b) qui communique avec les serveurs de protocole d'initialisation de session (3a, 3b) pour fournir un service de communication à un terminal utilisateur (7a, 7b, 7c, 7d),
dans lequel
le serveur de sélection de classification de ligne (5) reçoit, depuis un dispositif de communication d'un fournisseur de services, une requête de démarrage de service incluant des informations de classification de service, des informations de conditions de réseau incluant une condition de qualité de communication et/ou une condition de facturation d'un réseau à utiliser, et des informations d'identification du terminal utilisateur,
le serveur de sélection de classification de ligne (5) se réfère aux informations de réseau basées sur les informations de conditions de réseau inclues dans la requête de démarrage de service et sélectionne une classification de réseau qui satisfait la condition de qualité de communication et/ou la condition de facturation,
le serveur de sélection de classification de ligne (5) transmet une requête de démarrage de serveur incluant les informations de classification de service, les informations d'identification du terminal utilisateur et la classification de réseau sélectionné au serveur de commande de communication (4a, 4b), et
le serveur de commande de communication reçoit la requête de démarrage de serveur, et communique avec le serveur de protocole d'initialisation de session (3a, 3b) correspondant à la classification de réseau sélectionnée, pour exécuter une commande de communication pour fournir le service de communication correspondant aux informations de classification de service au terminal utilisateur correspondant aux informations d'identification du terminal utilisateur (7a, 7b, 7c, 7d),
dans lequel
les informations de qualité de communication incluent une ou plusieurs informations de présence ou d'absence de commande de priorité (232), informations de classe de commande de priorité (233), et informations de présence ou d'absence d'un circuit redondant (234), et
les informations de facturation incluent des informations de présence ou d'absence de facturation (235) en raison de l'utilisation du réseau.

8. Système de communication comprenant :
un serveur de sélection de classification de ligne (5) qui stocke, pour chacune des classifications de réseau d'une pluralité de réseaux, des informations de réseau incluant soit des informations de qualité de communication, soit des informations de facturation, soit encore les deux, du réseau ; et
un serveur de distribution vidéo (9) pour distribuer des données vidéo à des terminaux utilisateurs via un réseau sélectionné parmi la pluralité de réseaux,
dans lequel
le serveur de sélection de classification de ligne (5) reçoit, depuis un dispositif de communication d'un fournisseur de services, une requête de démarrage de service incluant des informations de classification vidéo, des informations de conditions de réseau incluant une condition de qualité de communication et/ou une condition de facturation d'un réseau à utiliser, et des informations d'identification du terminal utilisateur,
le serveur de sélection de classification de ligne (5) se réfère aux informations de réseau basées sur les informations de conditions de réseau inclues dans la requête de démarrage de service et sélectionne une classification de réseau qui satisfait la condition de qualité de communication et/ou la condition de facturation,
le serveur de sélection de classification de ligne (5) transmet une requête de démarrage de serveur incluant les informations de classification vidéo, les informations d'identification du terminal utilisateur, et la classification de réseau sélectionnée au serveur de distribution vidéo (9), et
le serveur de distribution vidéo (9) reçoit la requête de démarrage de serveur, et distribue des données vidéo correspondant aux informations de classification vidéo au terminal utilisateur correspondant aux informations d'identification du terminal utilisateur via le réseau de là classification de réseau sélectionnée,
dans lequel
les informations de qualité de communication incluent une ou plusieurs informations de présence ou d'absence de commande de priorité (232), informations de classe de commande de priorité (233), et informations de présence ou d'absence d'un circuit redondant (234), et
les informations de facturation incluent des informations de présence ou d'absence de facturation (235) en raison de l'utilisation du réseau.
